# EUROPEAN PATENT APPLICATION

(11) **EP 4 261 967 A2**
(43) Date of publication of application: **18.10.2023**
(21) Application number: 22206305.9
(22) Date of filing: 09.11.2022
(51) Int. Cl.: H01M 10/04, H01M 50/209, H01M 50/244, H01M 50/249

(54) **BATTERY DEVICE, ASSEMBLING METHOD AND ASSEMBLING EQUIPMENT THEREOF, AND BATTERY COMPONENT POSITIONING TOOLING**

(30) Priority: 11.04.2022 CN 202210372831
(71) Applicant: CALB Co., Ltd., Changzhou City, Jiangsu Province (CN)
(72) Inventor: DENG, Feng, Changzhou City, Jiangsu Province (CN); JIANG, Xinwei, Changzhou City, Jiangsu Province (CN)
(74) Representative: Becker, Eberhard

(57) **Abstract**

The disclosure relates to the technical field of batteries and discloses a battery device, an assembling method and an assembling equipment thereof, and a battery component positioning tooling. The battery device includes a beam (2), a box base plate (4), a box bezel (3), and a battery (1). The beam (2), the box base plate (4), and the box bezel (3) surround to form a box. The battery (1) is disposed in the box. The assembling method includes the following steps. The beam (2), the box base plate (4), and the box bezel (3) are respectively connected and assembled with the battery (1) according to a set sequence. In the set sequence, the box base plate (4) or at least part of the box bezel (3) is assembled after the beam (2).

## Description

### BACKGROUND

### Technical Field

The disclosure relates to the technical field of batteries, and in particular to a battery device, an assembling method and an assembling equipment thereof, and a battery component positioning tooling.

### Description of Related Art

In the conventional design, the assembling method of a battery pack is to assemble a battery box, and then place batteries into the box in groups, that is, assemble the box first, and then complete the assembly of the battery group. Therefore, the assembling process of the battery pack is relatively complicated, has low efficiency, and is difficult to implement automated production. Also, a series of unstable factors are present during the process of transferring the box and the batteries, resulting in a decrease in yield.

### SUMMARY

The disclosure provides a battery device, an assembling method and an assembling equipment thereof, and a battery component positioning tool, which are used to improve an assembling process of the battery device and increase the production efficiency.

According to a first aspect, the disclosure provides an assembling method of a battery device. The battery device includes a beam, a box base plate, a box bezel, and a battery. The beam, the box base plate, and the box bezel surround to form a box. The battery is disposed in the box. The assembling method includes the following steps.

The beam, the box base plate, and the box bezel are respectively connected and assembled with the battery according to a set sequence. In the set sequence, the box base plate or at least part of the box bezel is assembled after the beam.

According to a second aspect, the disclosure provides a battery device. The battery device is prepared by adopting the assembling method of the battery device. The battery device includes a box formed from a beam, a box bezel, and a box base plate, and a battery located in the box.

According to a third aspect, the disclosure provides an assembling equipment of a battery device. The assembling equipment of the battery device is used to executes the steps in the assembling method of the battery device. The assembling equipment includes the following.

A first assembling mechanism is configured to assemble and fix a beam and a battery.

A second assembling mechanism is configured to assemble a box base plate and/or at least part of a box bezel on a component assembled and formed from the beam and the battery.

According to a fourth aspect, the disclosure provides a battery component positioning tooling. The battery component positioning tooling is used to position at least part of components constituting a battery device during an assembling process of the battery device. The battery device includes a beam, a box base plate, a box bezel, and a battery. The beam, the box base plate, and the box bezel surround to form a box. The battery is disposed in the box.

The battery component positioning tooling includes a carrier plate and a positioning structure located on the carrier plate. The carrier plate is used to carry at least one of the box bezel, the beam, and the battery. The positioning structure is used to position at least one of the box bezel, the beam, and the battery.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a flowchart of an assembling method of a battery device according to an embodiment of the disclosure.
FIG. 2 is a schematic diagram of a structure of a first beam of a battery device according to an embodiment of the disclosure.
FIG. 3 is a schematic diagram of a structure of assembling a battery based on a common structural beam in an assembling method of a battery device according to an embodiment of the disclosure.
FIG. 4 is a schematic diagram of a structure of assembling a heat exchange functional beam on another side of a battery group in an assembling method of a battery device according to an embodiment of the disclosure.
FIG. 5 is a schematic diagram of a structure of continuing to assemble a battery based on a heat exchange functional beam in an assembling method of a battery device according to an embodiment of the disclosure.
FIG. 6 is a schematic diagram of a structure of installing a second common structural beam in an assembling method of a battery device according to an embodiment of the disclosure.
FIG. 7 is a schematic diagram of a structure after installing a first beam and a battery in place in an assembling method of a battery device according to an embodiment of the disclosure.
FIG. 8 is a schematic diagram of a structure after installing a second beam in place in an assembling method of a battery device according to an embodiment of the disclosure.
FIG. 9 is a schematic diagram of a structure after installing front and rear bezels in place in an assembling method of a battery device according to an embodiment of the disclosure.
FIG. 10 is a schematic diagram of a structure after installing left and right bezels in place in an assembling method of a battery device according to an embodiment of the disclosure.
FIG. 11 is a schematic diagram of a structure after installing a base plate in place in an assembling method of a battery device according to an embodiment of the disclosure.
FIG. 12 is a schematic diagram of a structure after installing a busbar in place in an assembling method of a battery device according to an embodiment of the disclosure.
FIG. 13 is a schematic diagram of a structure after installing an electrical device in place in an assembling method of a battery device according to an embodiment of the disclosure.
FIG. 14 is a schematic diagram of a structure after installing a cover plate in place in an assembling method of a battery device according to an embodiment of the disclosure.
FIG. 15 is a schematic diagram of an exploded structure of a connecting part of left and right bezels and front and rear bezels in a battery device according to an embodiment of the disclosure.
FIG. 16 is a schematic diagram of a structure of a connecting part of left and right bezels and front and rear bezels in a battery device according to an embodiment of the disclosure.
FIG. 17 is a schematic diagram of a structure of an assembling process of a battery and a first beam in an assembling method of a battery device according to an embodiment of the disclosure.
FIG. 18 is a schematic diagram of a structure of an assembling process of a battery and a first beam in an assembling method of a battery device according to another embodiment of the disclosure.
FIG. 19 is a schematic diagram of a structure of an assembling process of a battery and a first beam in an assembling method of a battery device according to another embodiment of the disclosure.
FIG. 20 is a schematic diagram of a structure of a battery component positioning tooling when assembling a battery and a first beam according to an embodiment of the disclosure.

### DETAILED DESCRIPTION OF DISCLOSED EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

At present, with the rise of electric vehicles, the new energy battery device used in the field of electric vehicles has developed rapidly. The battery device generally includes an external sealed box and a battery group located in the box. The battery group constitutes of square batteries, such as square lithium-ion batteries. The box of the battery device is generally an independent product, which is assembled and integrated by a third party and then supplied to a battery manufacturer, and the battery manufacturer completes the battery boxing operation to assemble to form the battery device product. Therefore, the production cycle of the battery device is relatively long, the efficiency is relatively low, the production process is not conducive to automated production, and quality issues frequently occur in the initial integration stage of the box and the assembly stage of the battery, which is not conducive to improving the production yield of the battery device. In addition, the current box of the battery device is mainly assembled by welding, which is easy to cause a series of issues affecting quality, such as dimensional thermal deformation deviation, low primary airtight pass rate, reduced performance of secondary repair welding materials, difficult removal of metal residues on bezels after welding, and system insulation failure caused by welding slags/welding seams.

In view of this, the disclosure provides a battery device, an assembling method and an assembling equipment thereof, and a battery component positioning tooling, which are used to improve the assembling process of the battery device and improve the assembling efficiency and the yield of the battery device.

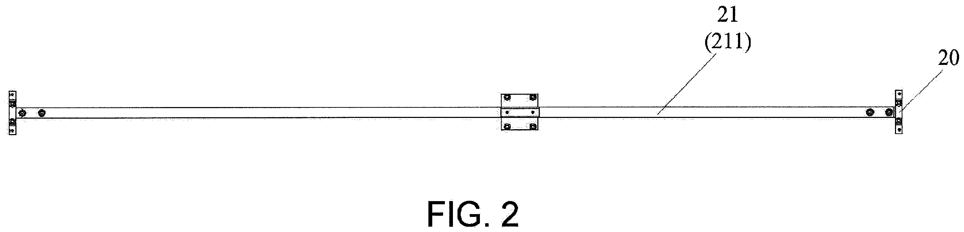

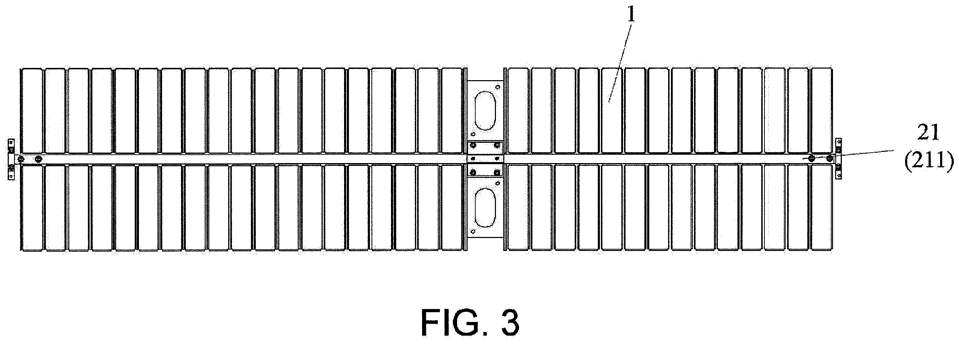

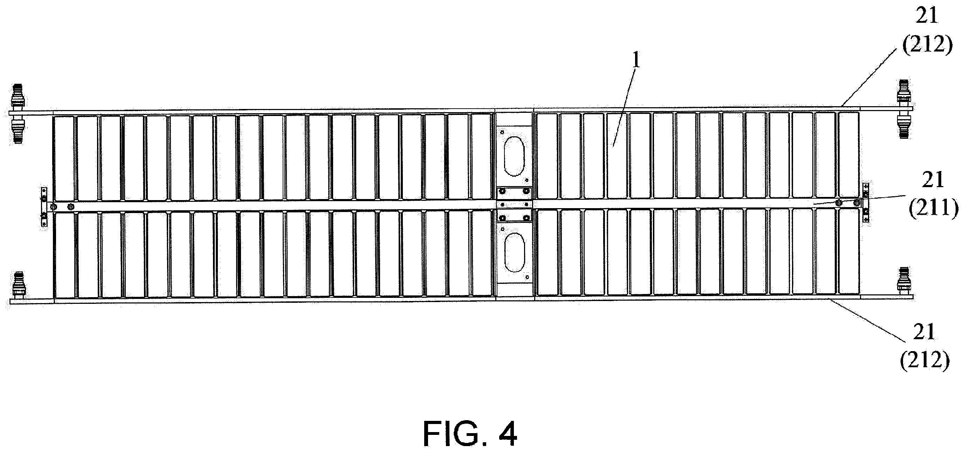

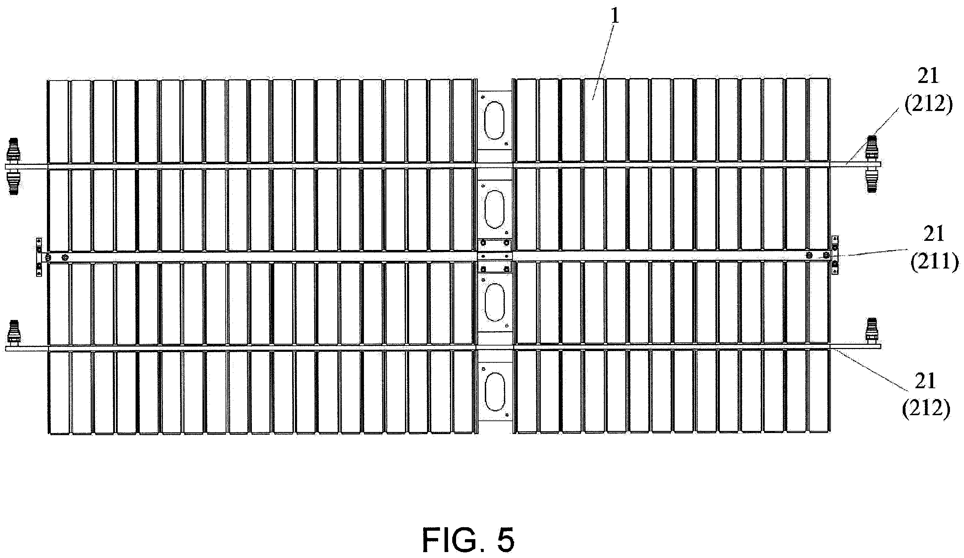

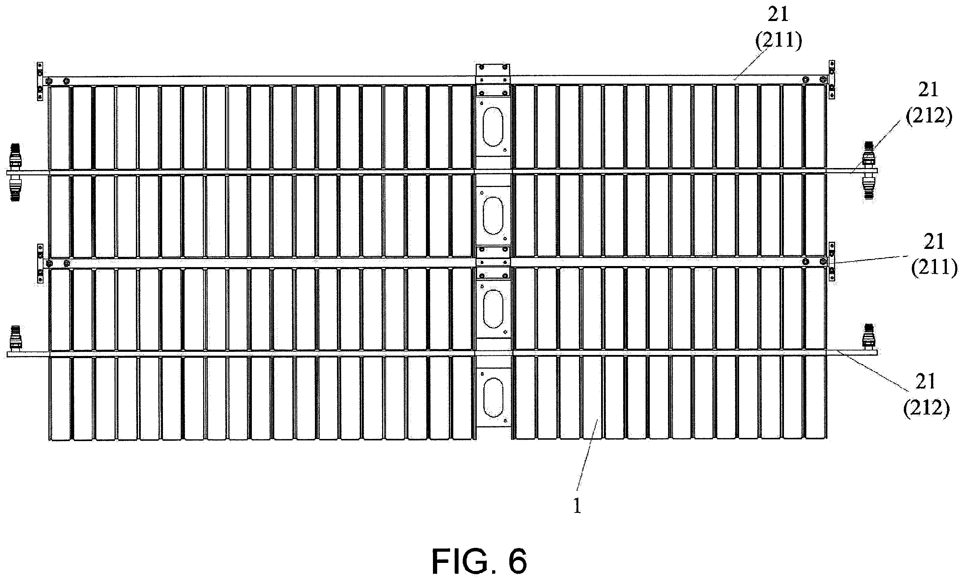

According to a first aspect, the disclosure provides an assembling method of a battery device. Referring to FIG. 2 to FIG. 11, the battery device includes a beam 2, a box base plate 4, a box bezel 3, and a battery 1. The beam 2, the box base plate 4, and the box bezel 3 surround to form a box, and the battery 1 is disposed in the box. 'Surround to form a box' refers to surrounding to form the shape of the box. The box is not necessarily a complete sealed structure. For example, the box bezel 3 may include front and rear bezels 31 and left and right bezels 32, and the beam 2 may include a first beam 21 and a second beam 22. The box formed from the beam 2, the box base plate 4, and the box bezel 3 refers to a box form with an upper opening without a cover. Specifically, the assembling method of the battery device provided in the disclosure includes the following steps:

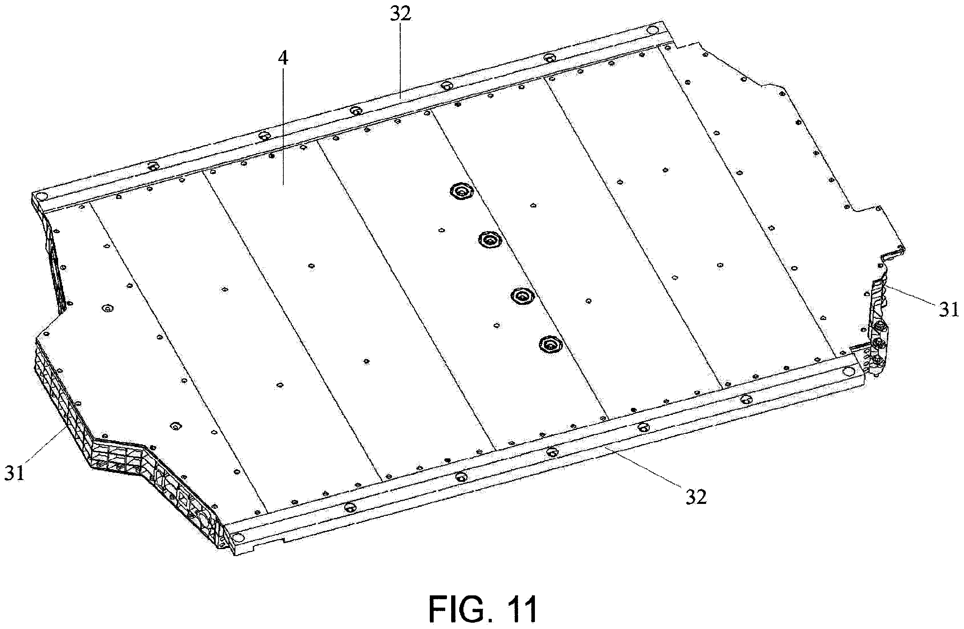

The beam 2, the box base plate 4, and the box bezel 3 are respectively connected and assembled with the battery 1 according to a set sequence. In the set sequence, the box base plate 4 or at least part of the box bezel 3 is assembled after the beam 2. For example, as shown in FIG. 2 to FIG. 10, the beam 2 and the box bezel 3 may be connected to the battery 1 first, and the box base plate 4 that is not connected to the battery 1 may be then further installed, as shown in FIG. 11. Alternatively, the beam 2 and the box base plate 4 are connected to the battery 1 first, and the box bezel 3 that is not connected to the battery 1 is then installed.

The assembling method of the battery device provided in the disclosure does not need to assemble the box of the battery device in advance, but integrates the assembling process of the battery 1 with the assembling steps of the box. Firstly, the battery 1 is connected to a partial structure (the beam 2, the box bezel 3, or the box base plate 4) for constituting the box, and a remaining part for constituting the box is then installed to form the complete box. After assembling the battery 1, the complete box is assembled and formed, so that the entire assembling process is seamlessly connected and is not easy to produce factors that affect the yield of the battery device. For example, it is only necessary to connect the battery 1 to a part of the box structure when assembling the battery 1, and the battery 1 does not need to be assembled by adopting overpressure and being vertically inserted into the box, and is not limited by the box structure, which is beneficial to improving the assembling efficiency and the yield. Moreover, non-welding forms such as bonding and/or fastener connection may be adopted between the successively installed parts of the box structure, which may prevent issues such as poor consistency of the box caused by welding, and poor assembly and insulation failure caused by welding slags, welding seams, etc. compared with the manner of forming the box by welding in advance and then assembling the battery 1. In addition, through the innovation of the assembling manner of integrating the battery 1 to the battery device, the assembling method of the disclosure breaks the traditional independent manufacturing mode of the box, highly integrates the box manufacturing processing and the system assembling processing, has simpler assembling process and processing, and can implement the seamless connection of the entire assembling process, which is conducive to building a fully automated production line, improving the production efficiency, implementing high-speed manufacturing and high-yield manufacturing, and reducing manufacturing costs. In addition, if the box bezel 3 and the box base plate 4 surround to form the box, and the battery 1 is already assembled into the box, and the beam 2 is then assembled, at this time, due to the assembly tolerance, the beam 2 may not be able to be assembled into the box. If the beam is forcibly plugged in, the box may be deformed. If the battery 1 is extruded, the battery 1 may be deformed or damaged, which affects the life of the battery 1. In the assembling solution of the disclosure, the beam 2 is assembled before the box base plate 4 or at least part of the box bezel 3, and the beam 2 is not assembled last, that is, before the beam 2 is assembled, the complete box is not formed, so that the limitation of the assembling space of the box structure to the beam 2 can be reduced, which may prevent the above assembling issues, thereby further improving the assembling efficiency and the yield.

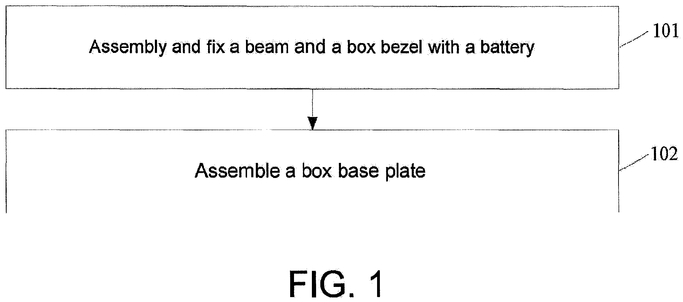

In some embodiments, respectively connecting and assembling the beam 2, the box base plate 4, and the box bezel 3 with the battery 1 according to the set sequence may specifically include the following steps, as shown in FIG. 1.

In Step 101, as shown in FIG. 2 to FIG. 10, the beam 2 and the box bezel 3 are assembled and fixed with the battery 1.

In Step 102, as shown in FIG. 11, the box base plate 4 is then assembled.

The stability of a component formed by assembling and fixing the box bezel 3 and the beam 2 with the battery 1 is better, and the relative positions between each battery 1 and a box frame are determined first, which is beneficial to the installation operation of the subsequent remaining partial structures (for example, the box base plate 4 and a busbar), and is beneficial to improving the overall assembling yield and efficiency of the final battery device.

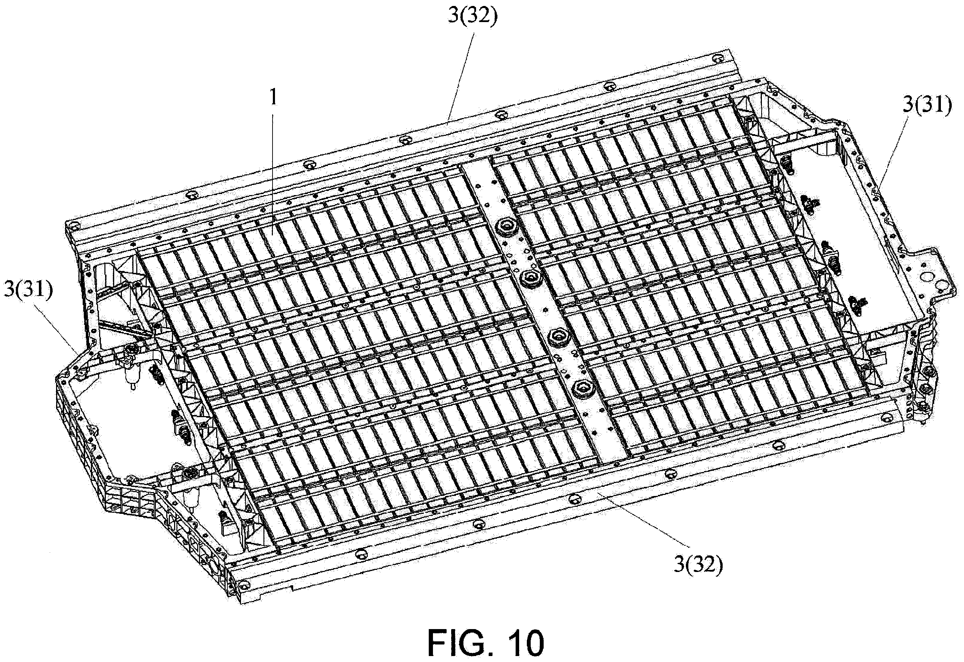

In some embodiments, in Step 101, assembling and fixing the beam 2 and the box bezel 3 with the battery 1 specifically includes the following. As shown in FIG. 10 and FIG. 11, one side of the battery 1 where a pole is located faces the ground to be assembled and fixed with the box bezel 3 and the beam 2. Exemplarily, the battery 1 may be a lithium-ion square battery 1 and is specifically a hexahedron. The side of the battery 1 where the pole is located is away from the box base plate 4, faces a cover plate of the battery device, and is used to arrange a busbar 5 and connect to a harness plate component through the busbar 5.

Further, in Step 102, assembling the box base plate 4 may include the following implementation.

As shown in FIG. 10 and FIG. 11, the box base plate 4 is bonded and fixed with one side of the battery 1 away from the pole.

Further, the assembling method of the battery device may further include the following steps.

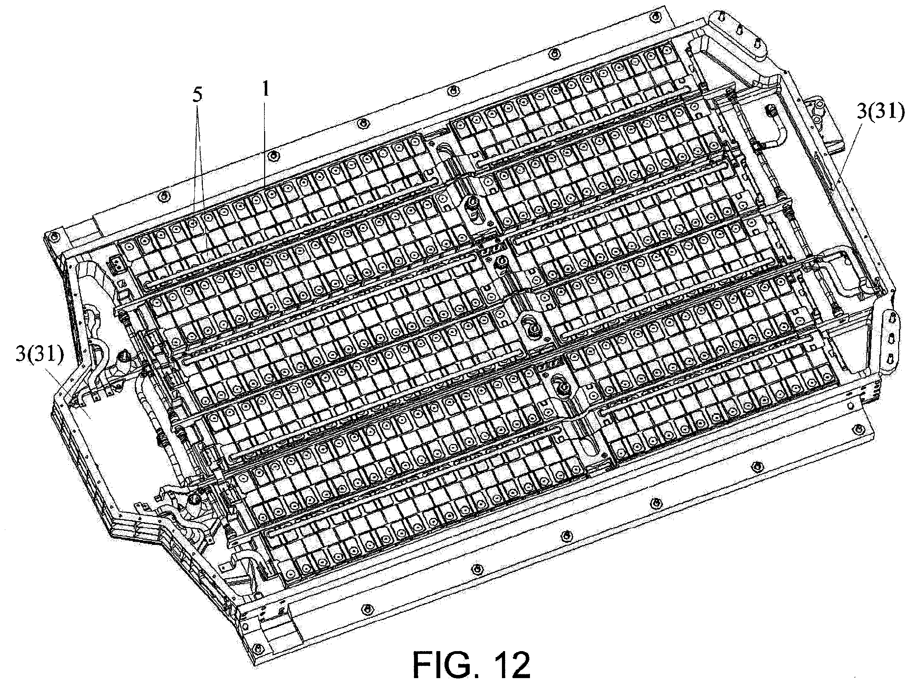

In Step 103, as shown in FIG. 11 and FIG. 12, a module assembled with the box base plate 4 is turned over as a whole, and the busbar 5 is assembled on the side of the battery 1 where the pole is provided.

In the embodiment, the side of the battery 1 where the pole is located faces the ground to be assembled with the box frame, that is, the battery 1 and the box frame are inverted for connection and assembly. In this way, after connecting and assembling the battery 1 with the box frame, the assembly of the box base plate 4 may be directly performed without moving the component consisting of the battery 1 and the box frame. Then, the component is turned over to assemble structures such as the busbar 5, the harness plate component, and a cover plate 7 of the box. Since the battery 1 and the box frame are inverted when assembling the box base plate 4, the assembling operation of the box base plate 4 is simple, such as installing a locking member on one side of the box base plate 4 and other operations, which are very convenient.

In some embodiments, in Step 101, assembling and fixing the beam 2 and the box bezel 3 with the battery 1 specifically includes the following.

A positioning tooling is provided to assemble and connect the box bezel 3, the beam 2, and the battery 1 on the positioning tooling. The positioning tooling is provided with a positioning structure, and the positions of the box bezel 3, the beam 2, and/or the battery 1 are positioned through the positioning structure.

In the embodiment, the positioning tooling may not only carry assembly parts, but may also position the assembly parts. For example, the relative positions of the beam 2, the box bezel 3, and each battery 1 may be positioned through the positioning tooling, thereby improving the assembling efficiency and ensuring the consistency and the yield of assembled components.

For example, as shown in FIG. 2 to FIG. 10, firstly, the box frame and the battery 1 are assembled on the positioning tooling. Further, as shown in FIG. 10 and FIG. 11, the assembling steps of the box base plate 4 may also be performed on the positioning tooling, that is, after the box frame and the battery 1 are assembled and connected on the positioning tooling. There is no need to move or turn over the box frame and the battery 1, and the box base plate 4 is directly bonded and fixed with the side of the battery 1 away from the pole to complete the assembly of the box. As shown in FIG. 12 to FIG. 14, the box may be turned over, so that one side of the opening of the box faces upwards to facilitate further assembly of structures such as the busbar 5, the harness plate component, an electrical device 6, and the cover plate 7.

In some embodiments, after the beam 2, the box bezel 3, and the battery 1 are assembled and fixed, in a direction perpendicular to a large surface of the battery, there is a gap between at least one large surface of each battery 1 and an adjacent structure. The battery 1 is a hexahedron. The large face of the battery is the two opposite surfaces with the largest area. In this way, the battery can be prevented from being extruded, and the further extrusion of the batteries due to expansion and deformation when working can be alleviated, thereby improving the safety performance of the battery. Exemplarily, there may be an interval between two adjacent large surfaces of the batteries, there may be an interval between the large surface of the battery and an adjacent spacer, or there may be an interval between the large surface of the battery and the adjacent box frame.

At present, the conventional assembling process is to assemble the box in advance and then put the battery into the box. Generally, it is necessary to adopt a clamping tooling to pressurize the battery group in the direction perpendicular to the large surface of the battery, and then put the over pressurized battery group into different cavities of the box. During the assembling process and after assembly, each battery is subjected to a certain extrusion force in the direction perpendicular to the large surface of the battery, and the battery is prone to expansion and deformation during charging and discharging processes, especially in the direction perpendicular to the large surface of the battery. As such, the battery device prepared by adopting the conventional method is prone to defects or even safety issues due to the force and large changes in deformation during the usage process. The assembling process of the embodiment integrates the assembling process of the battery with the assembling steps of the box, and does not require the operation of over pressing the battery group into the box. Also, the positioning tooling may be adopted during the assembling process to ensure the relative positions of each battery group and the box frame, thereby ensuring that each battery is not subjected to the extrusion force in the direction perpendicular to the large surface of the battery. Therefore, the assembling process of the battery device provided in the embodiment can reduce or prevent the extrusion of each battery in the direction perpendicular to the large surface of the battery during the assembling process and after assembly, thereby increasing the service life of the battery device, and reducing the probability of safety issues of the battery device.

Exemplarily, in Step 101, assembling and fixing the beam 2 and the box bezel 3 with the battery 1 may specifically include the following.

A spacer is disposed on one side of the large surface of at least the battery 1, and the batteries 1 are then sequentially assembled along the direction perpendicular to the large surface of the battery. There is a gap between the battery 1 that is assembled later and the adjacent battery 1 that is assembled earlier. In this way, each battery 1 may be arranged along the direction perpendicular to the large surface of the battery, and there is a certain interval between each battery 1 and the adjacent battery 1 or the adjacent spacer. For example, the spacer is disposed on one side of the large surface of each battery 1, so there is the spacer between any two adjacent batteries 1. One side of the spacer is bonded with the large surface of one battery, and the interval is provided between the other side and the large surface of another battery. Therefore, there is no extrusion between the adjacent batteries 1, and the interval and the spacer can provide buffers for the expansion and deformation of the battery when the battery 1 is working to prevent poor extrusion or other safety issues due to a large deformation of the battery 1.

In some embodiments, in Step 101, assembling and fixing the beam 2 and the box bezel 3 with the battery 1 may include the following steps.

In Step 201, as shown in FIG. 2 to FIG. 8, firstly, the battery 1 and the beam 2 are bonded and fixed.

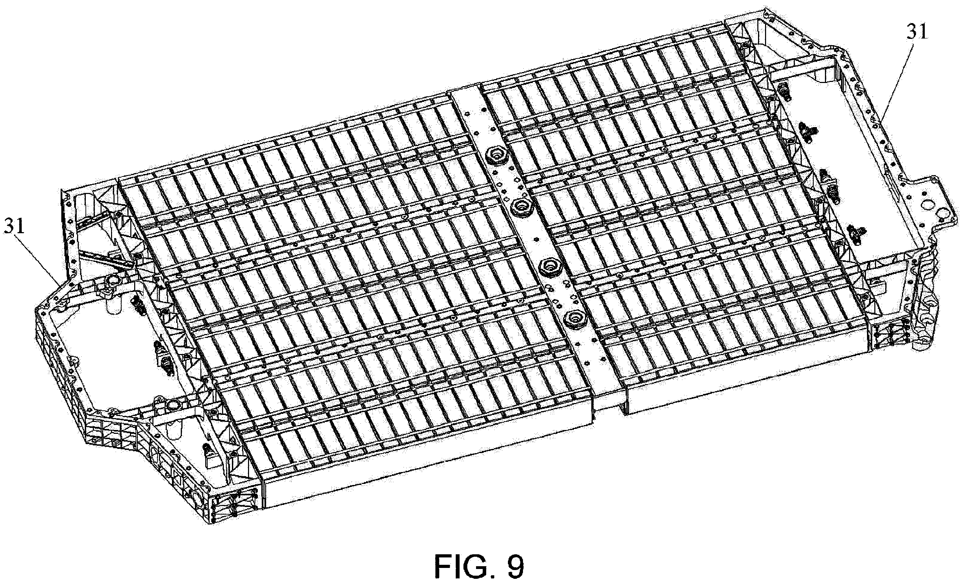

In Step 202, as shown in FIG. 9 and FIG. 10, the box bezel 3 is then connected to the beam 2 to form the box frame.

By adopting the assembling method in the embodiment, each battery 1 may be pre-fixed through the beam 2, which facilitates the subsequent installation of the box bezel 3, the box base plate 4, and other structures.

In some embodiments, Step 201, bonding and fixing the battery 1 and the beam 2 may include the following.

As shown in FIG. 2 to FIG. 7, a first side surface of the battery 1 and the first beam 21 are bonded and fixed, and the first side surface of the battery 1 is perpendicular to the large surface of the battery.

In the manufactured battery device, the batteries 1 are accommodated in the cavities of the box in groups, and the batteries 1 in the battery group are arranged along the direction perpendicular to the large surface of the battery. Through bonding and fixing the first side surface of each battery 1 and the first beam 21, each battery 1 is based on the first beam 21 and is arranged along an extension direction of the first beam 21 to form the battery group. The batteries 1 in each battery group may all be connected and fixed with the adjacent first beam 21, thereby facilitating subsequent installation of other structures and improving the overall stability of the battery device.

Specifically, the batteries 1 in the battery group may be sequentially respectively bonded with the first beam 21, or the batteries 1 may be arranged into groups first and then uniformly pasted onto the first beam 21, which may be determined according to actual requirements.

Exemplarily, as shown in FIG. 2 to FIG. 7, bonding and fixing the first side surface of the battery 1 and the first beam 21 may specifically include the following implementation. The first beam 21 includes a common structural beam 211 and a heat exchange functional beam 212. The common structural beam 211 is only used as a structural bezel, and the heat exchange functional beam 212 is configured as a liquid-cooling plate. In addition to being used as the structural bezel, a heat exchange medium may be circulated inside for the heat exchange of the battery 1. Along a direction perpendicular to the first beam 21, the common structural beam 211 and the heat exchange functional beam 212 are alternately disposed. The battery 1 includes two opposite first side surfaces, one first side surface is bonded and fixed with the common structural beam 211, and the other first side fixed to is bonded and fixed with the heat exchange functional beam 212.

Because the common structural beam 211 has high structural strength, and there is no heat exchange flow channel inside, there is no safety risk such as liquid leakage, so it is beneficial to strengthening the strength and the stability of the box frame. For example, the common structural beam 211 may be connected to the box base plate 4 or the box bezel 3 through a fastener. The heat exchange functional beam 212 may exchange heat with the adjacent battery 1, thereby improving the working efficiency and the yield of the battery 1. In the embodiment, through disposing the common structural beam 211 on one side of each battery group and disposing the heat exchange functional beam 212 on the other side, the structural strength and the working performance of the battery device can be simultaneously improved with significant beneficial effects. Of course, for the battery group located at the end in the direction perpendicular to the first beam 21, one of the first side surfaces thereof is bonded with the first beam 21, and another first side surface may not be bonded with the first beam 21, but be directly in contact with the box bezel 3, that is, for the battery group located at the end in the direction perpendicular to the first beam 21, only one side is bonded with the common structural beam 211 or the heat exchange functional beam 212. Preferably, one side of the battery group at the end is bonded with the heat exchange functional beam 212.

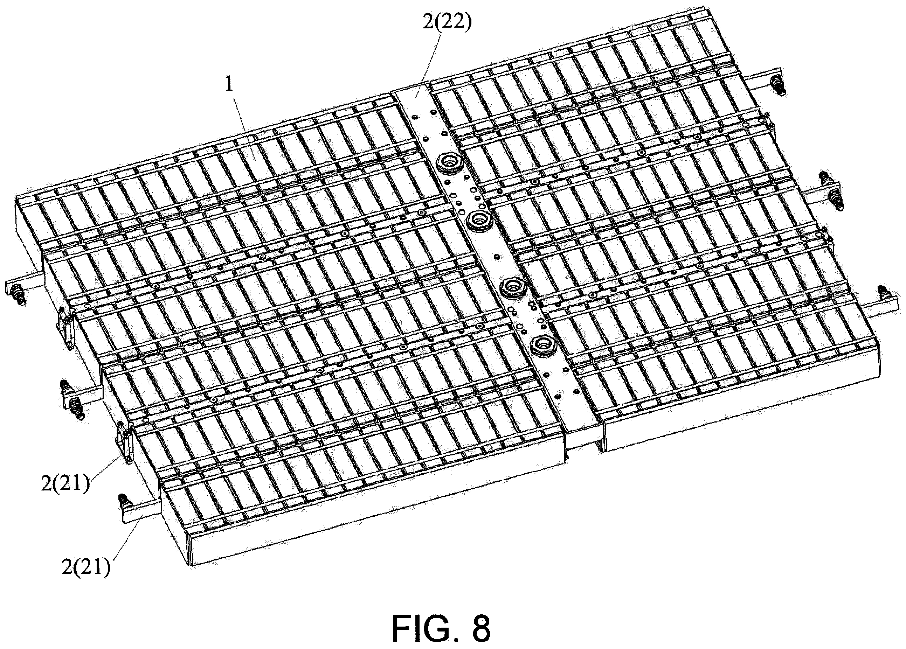

Further, in Step 201, bonding and fixing the battery 1 and the beam 2 also includes the following. As shown in FIG. 8, after bonding and fixing the first side surface of the battery 1 and the first beam 21, the second beam 22 is assembled. The second beam 22 is perpendicular to the first beam 21, and the second beam 22 is snap-fitted with the first beam 21.

Specifically, the second beam 22 is perpendicular to the arrangement direction of each battery 1 in the battery group and is parallel to the large surface of the battery 1. Through the second beam 22 and the first beam 21 intersecting and being perpendicular to each other, multiple regions may be separated, so that different battery groups may be separated into different regions.

In some embodiments, in Step 202, the step of connecting the box bezel 3 and the beam 2 to form the box frame specifically includes the following implementation.

As shown in FIG. 8, FIG. 9, and FIG. 10, the front and rear bezels 31 are assembled first, and the left and right bezels 32 are then assembled. The front and rear bezels 31 are respectively located at two ends of the first beam 21. The left and right bezels 32 extend in the same direction as the first beam 21.

Exemplarily, surfaces of the left and right bezels 32 facing an inner side of the box are bonded with end surfaces of the front and rear bezels 31.

The left and right bezels 32 are used to sheath the end surfaces of the front and rear bezels 31, and may seal the ends of the front and rear bezels 31. If the left and right bezels 32 are installed first, the front and rear bezels 31 need to be inserted into a spacing defined by the left and right bezels 32, which is not easy to assemble, and since there is a sealant between the ends of the front and rear bezels 31 and the left and right bezels 32, the front and rear bezels that are installed later are prone to glue spreading. Installing the front and rear bezels 31 first and then installing the left and right bezels 32 can not only prevent glue spreading, but also facilitate the operation of squeezing excessive glue along a direction perpendicular to a contact surface of the two, which is conducive to the bonding and fixing strength and the sealing yield of the two.

Exemplarily, in Step 202, connecting the box bezel 3 to the beam 2 to form the box frame specifically includes the following.

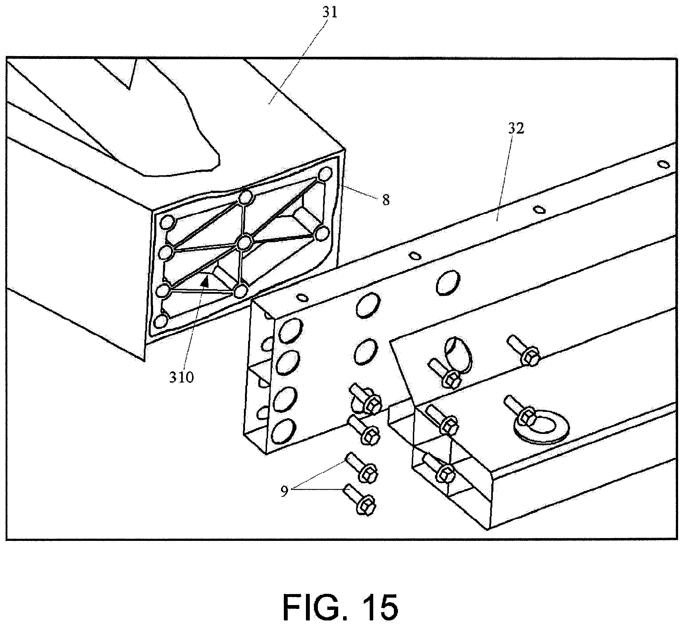

As shown in FIG. 15, the ends of the front and rear bezels 31 are provided with a glue groove, and a sealant 8 is disposed in the glue groove. In this way, it is convenient to accommodate the sealant 8 and define the bonding region of the sealant 8. For example, the front and rear bezels 31 are provided with a cavity for weight reduction, and the ends of the front and rear bezels 31 are provided with a cavity opening 310. The glue groove may be disposed around the cavity opening 310, so that the cavity opening 310 of the front and rear frames 31 may be sealed by the sealant 8 to improve the air tightness of the battery device.

Further, when the left and right bezels 32 are installed, the surfaces of the left and right bezels 32 facing the inner side of the box and the end surfaces of the front and rear bezels 31 are bonded by the sealant 8 and locked by a fastener 9. In this way, the fastener 9 may further ensure the connection strength of the front and rear bezels 31 and the left and right bezels 2, thereby ensuring the structural strength of the entire battery device.

Exemplarily, connecting the box bezel 3 to the beam 2 to form the box frame also includes the following.

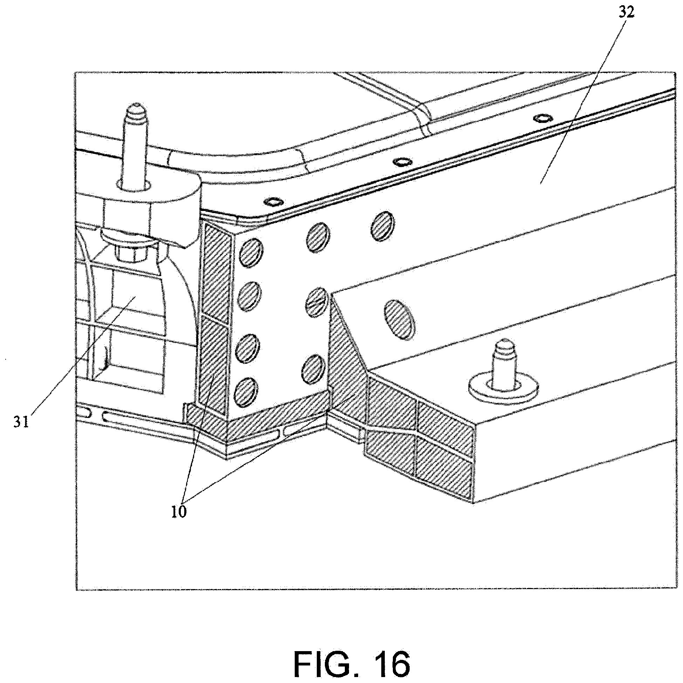

As shown in FIG. 16, the end surfaces of the left and right bezels 32 are provided with cavity openings. The cavity openings on the end surfaces of the left and right bezels 32 are sealed by glue to improve the air tightness of the battery device and prevent phenomenon such as eolian sound when the battery device is applied in a driving environment.

For example, a styrofoam 10 may be specifically adopted to block the cavity openings of the end surfaces of the left and right bezels 32.

Exemplarily, the steps of assembling the front and rear bezels 31 may specifically include the following situation.

As shown in FIG. 2 and FIG. 9, the two ends of the first beam 21 are provided with adapters 20. The front and rear bezels 31 are provided with slots for inserting and matching with the adapters 20. The adapters 20 at the two ends of the first beam 21 are inserted into the slots of the front and rear bezels 31.

Exemplarily, the adapter 20 may be inserted into a main body of the first beam 21 and locked through a locking member. For example, the adapter 20 may be T shaped, wherein a vertical structure of the T shape is inserted into the cavity of the main body of the first beam 21, and a horizontal structure of the T shape is inserted into the slots of the front and rear bezels 31.

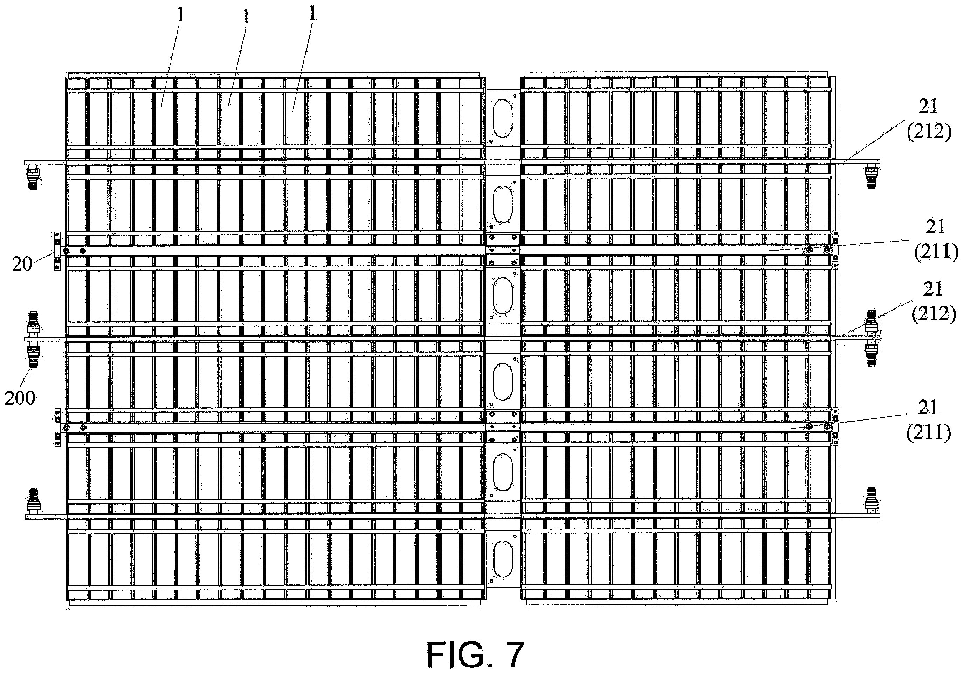

For example, as shown in FIG. 7 and FIG. 9, the first beam 21 includes the common structural beam 211 and the heat exchange functional beam 212. The adapters 20 are provided at two ends of the common structural beam 211 to connect to the front and rear bezels 31. Two ends of the heat exchange functional beam 212 are provided with a flow channel inlet/outlet 200 for connecting to a heat exchange medium pipe.

It should be noted that in the disclosure, the front and rear bezels 31 include two side bezels located at front and rear ends of a cavity frame and are oppositely disposed. Similarly, the left and right bezels 32 includes two opposite side bezels at left and right ends of the cavity frame.

In some embodiments, in Step 201, bonding and fixing the battery 1 and the beam 2 may specifically include the following implementation.

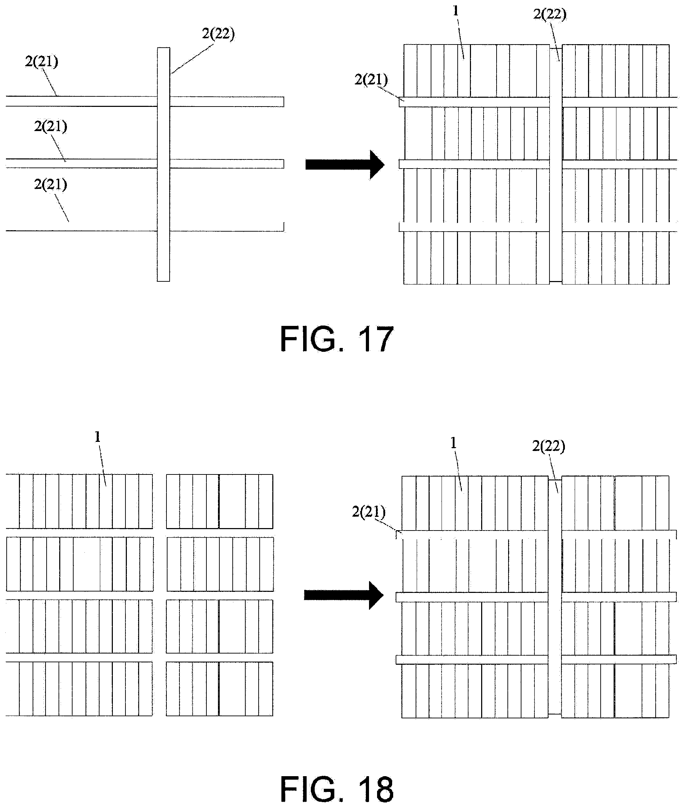

As shown in FIG. 17, the beam 2 is first arranged on the positioning tooling, and the battery 1 is then installed in a region surrounded by the beam 2, so that the battery 1 is bonded with the adjacent beam 2. For example, the first beam 21 and the second beam 22 are first arranged to surround to form multiple regions, and the battery 1 is then installed in each region. In this way, rapid positioning can be facilitated, which is conducive to further improving the work efficiency.

In other embodiments, in Step 201, bonding and fixing the battery 1 and the beam 2 may specifically include the following implementation.

As shown in FIG. 18, the battery 1 is first arranged on the positioning tooling, and the beam 2 is then installed between the batteries 1 and is bonded and fixed with the adjacent battery 1. For example, multiple groups of the batteries 1 are first arranged on the positioning tooling, and the first beam 21 and the second beam 22 are then arranged between the battery groups to separate different battery groups. In this way, the installation of the battery group is facilitated, which is beneficial to implementing that each battery 1 is not extruded in the direction perpendicular to the large surface. In addition, the two opposite sides of the beam are usually coated with glue to bond with different battery groups. If the battery groups on two sides of the beam are successively installed, there may be poor bonding caused by a glue layer being cured when installing the battery group later. By adopting the assembling method of the embodiment, two surfaces of the beam may be simultaneously bonded with the battery groups on two sides, thereby preventing the above issue.

In other embodiments, in Step 201, bonding and fixing the battery 1 and the beam 2 may specifically include the following implementation.

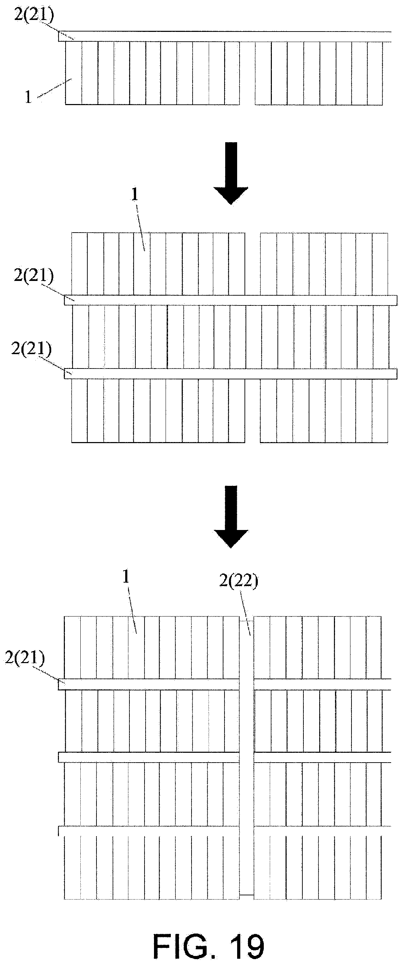

As shown in FIG. 19, the batteries 1 and the beams 2 are alternately arranged on the positioning tooling, and the adjacent battery 1 and beam 2 are bonded and fixed. In this way, the installation operation of the battery 1 and the beam 2 is very convenient, which is beneficial to improving the bonding yield between the battery 1 and the beam 2 to strengthen the overall structural strength.

For example, firstly, the first beam 21 is arranged on the positioning tooling, and the battery 1 adjacent to the first beam 21 is then arranged based on the first beam 21. The first beams 21 and the batteries 1 are alternately arranged along the horizontal direction by analogy until the preset required number of the batteries 1 is reached. Then, the second beam 22 may be arranged to separate different battery groups in the longitudinal direction.

Alternatively, firstly, a column of batteries 1 is arranged on the positioning tooling. The column of batteries 1 may be one battery group or may include two or more battery groups. Then, the first beam 21 adjacent to the column of batteries 1 is arranged based on the column of batteries 1. The column of batteries 1 and the first beams 21 are alternately arranged in the horizontal direction by analogy until the preset required number of the batteries 1 is reached. Then, the second beam 22 may be arranged to separate the column of batteries 1 into the battery groups.

Of course, the assembling method of the battery device and the specific implementation thereof provided in the embodiments of the disclosure are not limited to the examples in the foregoing embodiments. For example, it is also possible to first bond the battery 1 to the box base plate 4, and then assemble the box frame structures such as the beam 2 and the box bezel 3. At this time, the box base plate 4 is preferably provided with a positioning part of each battery 1. The battery 1 is preferably placed upright and bonded with the box base plate 4. Alternatively, the battery 1, the beam 2, and a part of the box bezel 3 (for example, front and rear bezels 301) may be assembled and fixed first, the box base plate 4 is then assembled, and the other part of the box bezel 3 (for example, left and right bezels 302) is finally assembled. The selection of the specific assembling manner of the disclosure may be determined according to the actual operation requirements.

According to a second aspect, the disclosure further provides a battery device. The battery device is prepared by adopting the assembling method of the battery device. Specifically, as shown in FIG. 8, FIG. 9, FIG. 10, and FIG. 11, the battery device includes the box formed from the beam 2, the box bezel 3, and the box base plate 4, and the battery 1 located in the box.

Exemplarily, the box bezel 3 and the box base plate 4 and the box bezel 3 and the beam 2 are all connected in a non-welding manner.

Specifically, in the battery device provided in the disclosure, different parts (the beam 2, the box bezel 3, or the box base plate 4) for constituting the box structure are directly integrated and assembled with the battery 1. Therefore, the entire assembling process is seamlessly connected, the assembling process and the processing are simpler, the degree of automation is high, and it is not easy to produce factors that affect the product yield of the battery device, which may improve the consistency and the yield of the assembly of the battery device. In addition, it is only necessary to connect the battery 1 to a part of the box structure when assembling the battery 1, and the battery 1 does not need to be assembled by adopting overpressure and being vertically inserted into the box, and is not limited by the box structure, which is beneficial to improving the assembling efficiency and the yield. Moreover, non-welding forms such as bonding and/or fastener connection may be adopted between the successively installed parts of the box structure, which may prevent issues such as poor consistency of the box caused by welding, and poor assembly and insulation failure caused by welding slags, welding seams, etc. compared with the manner of forming the box by welding in advance and then assembling the battery 1, which can further improve the yield of the battery device.

According to a third aspect, based on the assembling method of the battery device provided in the disclosure, the disclosure also provides an assembling equipment for a battery device. The assembling equipment is used to execute the steps of the assembling method of the battery device. The assembling equipment includes the following.

A first assembling mechanism is configured to assemble and fix the beam and the battery.

A second assembling mechanism is configured to assemble the box base plate and/or at least part of the box bezel on the component assembled and formed from the beam and the battery.

Specifically, the assembling equipment of the battery device provided in the embodiment is used to execute the steps in the assembling method of the battery device, which can implement the automation of the whole process assembling operation of the entire battery device, effectively improve the production efficiency of the battery device, and improve the assembling yield of the battery device.

For example, the first assembling mechanism may be configured to sequentially bond and fix the beam and the box bezel to the battery on the positioning tooling; and the second assembling mechanism may be configured to install the box base plate on the side of the battery away from the pole. Alternatively, the first assembling mechanism may be configured to bond and fix the beam and a part of the box bezel to the battery on the positioning tooling; and the second assembling mechanism may be configured to install the box base plate and another part of the box bezel. Of course, in the disclosure, the specific operation procedures and the assembling processing executed by the first assembling mechanism and the second assembling mechanism may also include multiple implementations, which are not limited to the foregoing embodiments and may be determined according to actual conditions.

In addition, the assembling equipment of the battery device provided in the disclosure is not limited to the above structure. For example, the assembling equipment may also include a third assembling mechanism, which is used to further execute operations such as assembling a busbar, a cover plate, etc. after installing the box and the battery.

Specifically, the battery device and the assembling equipment of the battery device provided in the disclosure have the same inventive concept, the same or corresponding embodiments, and beneficial effects as the assembling method of the battery device provided in the disclosure, which will not be repeated in the disclosure.

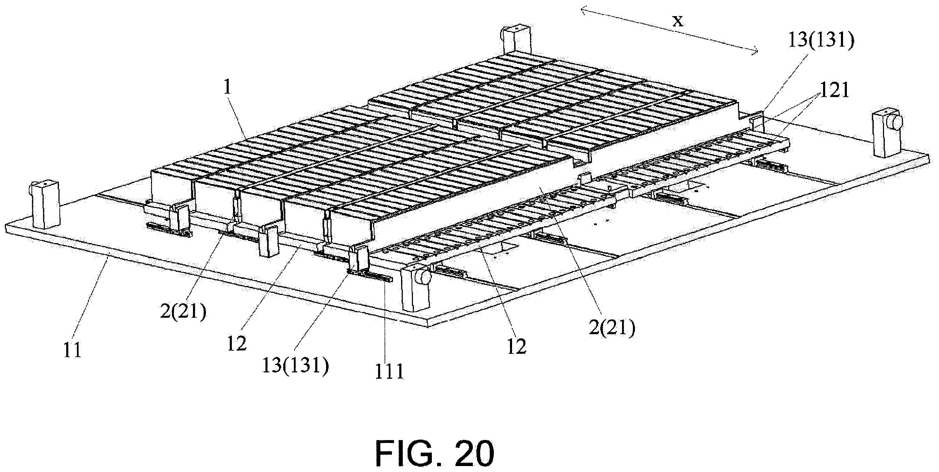

According to a fourth aspect, based on the assembling method of the battery device provided in the disclosure, the disclosure provides a battery component positioning tooling. The battery component positioning tooling is used to position at least part of components constituting the battery device during the assembling process of the battery device. As shown in FIG. 20, the battery device includes the beam 2, the box base plate, the box bezel, and the battery 1. The beam 2, the box base plate, and the box bezel surround to form the box. The battery 1 is disposed in the box. The battery component positioning tooling includes a carrier plate 11 and a positioning structure located on the carrier plate 11. The carrier plate 11 is used to carry at least one of the box bezel, the beam 2, and the battery 1. The positioning structure is used to position at least one of the box bezel, the beam 2, and the battery 1.

The battery component positioning tooling provided in the embodiment may be used to carry and position assembly parts such as the beam 2, the box bezel, and/or the battery 1 during the assembling process of the battery device, which is beneficial to positioning the relative positions of the beam 2, the box bezel, and each battery 1, thereby improving the assembling efficiency and ensuring the consistency and the yield of the assembled components.

In some embodiments, as shown in FIG. 20, the positioning structure includes a first positioning member 12, and the first positioning member 12 is used to carry and position the battery 1. The battery 1 is an important component of the battery device. The battery device generally includes multiple groups of batteries 1, and each group of batteries 1 includes multiple batteries 1. The position of each battery 1 in the battery device is well positioned, which is the key to improving the assembling efficiency of the battery device. In the embodiment, setting the first positioning member 12 is beneficial to fixing the relative positions between the batteries 1 and between the battery 1 and the box bezel and the beam, thereby improving the assembling efficiency and the yield.

Exemplarily, the first positioning member 12 includes a battery pole positioning part 121, and the battery pole positioning part 121 is used to position the pole of the battery 1. For example, the pole of the battery is convex relative to the surface of the battery 1. The battery pole positioning part 121 may be a slot matching a protruding part of the pole. Through inserting the protruding part of the pole of each battery 1 into the corresponding slot, each battery 1 may be pre-positioned.

Specifically, during the assembling process of the battery device, the side of the battery 1 provided with the pole is placed facing down on the first positioning member 12. The battery 1, the beam 2, and the box bezel may be assembled in an inverted manner, so that after assembling the battery 1, the beam 2, and the box bezel, the box base plate may be directly bonded and fixed to the side of the battery 1 away from the pole. Since the battery 1, the beam 2, and the box bezel are all inverted at this time, and the box base plate is installed directly above the structures, which is beneficial to the installation operation. For example, the box base plate may be easily locked with the beam 2 by adopting a locking member.

In some embodiments, as shown in FIG. 20, the beam 2 includes the first beam 21, and the batteries 1 are arranged into groups along the extension direction of the first beam 21. The positioning structure includes at least one first positioning member 12, and each first positioning member 12 is used to carry one battery group and position the batteries 1 in the battery group, so that each first positioning member 12 may determine the relative positions between the batteries 1 in the battery group, and then fix the relative positions of the first positioning members 12. That is, the positioning of all batteries 1 in the entire battery device may be completed. It should be noted that in the embodiment of the battery component positioning tooling, the battery group refers to the battery group formed from the column of batteries 1 arranged along the extension direction of the first beam 21, instead of the battery group formed by dividing the batteries in the box of the battery device in the conventional technology.

Exemplarily, the positioning structure includes at least two first positioning members 12 arranged along a first direction x, the at least two first positioning members 12 are disposed at an interval from each other, and the interval between the adjacent first positioning members 12 allows the first beam 21 to be placed.

Exemplarily, the first beam 21 may include the common structural beam and the heat exchange functional beam. The common structural beams and the heat exchange functional beams are alternately arranged. For the specific arrangement, reference may be made to the description of the relevant part of the embodiment of the assembling method of the battery device, which is not repeated here.

Specifically, the first beams 21 and the battery groups are alternately arranged. The adjacent battery groups are separated through the first beam 21. During the assembling process of the battery device, each battery group may be positioned first through the first positioning member 12, and the first beam 12 is then inserted between the adjacent first positioning members 12, so that the first beam 21 is located between the adjacent battery groups, thereby implementing the assembly and the positioning of the battery group and the first beam 21.

Exemplarily, the positioning structure further includes a first driving mechanism. The first driving mechanism is used to drive the first positioning member 12 to slide along the first direction x. Specifically, the first direction x is perpendicular to the extension direction of the first beam 21. Through driving the first positioning member 12 to slide along the first direction x, a spacing between the adjacent first positioning members 12 or a distance between the adjacent first beam 21 and battery group may be adjusted, which facilitates the assembling operation and improves the assembling efficiency and the yield. For example, when installing the battery group and the first beam 21, in order to prevent the glue layer rubbing between the battery group and the first beam 21, a certain gap may be reserved between the adjacent battery group and first beam 21 before being placed on the carrier plate 11. Then, through driving the first positioning member 12 below the battery group to move, the distance between the battery group and the first beam 21 is adjusted to complete a bonding operation between the battery group and the first beam 21.

Exemplarily, the first driving mechanism is an air cylinder. The air cylinder is disposed on one side of the carrier plate 11 away from the first positioning member 12 and is in driving connection with the first positioning member 12. That is, the air cylinder is located below the carrier plate 11, so that the space above the carrier plate 11 may be saved, which facilitates the assembling operation above the carrier plate 11.

In some embodiments, as shown in FIG. 20, the positioning structure further includes a second positioning member 13, and the second positioning member 13 is used to engage and position the two ends of the first beam 21 in the extension direction. For example, the second positioning member 13 may include a pair of snaps 131, and the pair of snaps 131 are symmetrically disposed for respectively engaging with the two ends of the first beam 21. The positioning of the first beam 21 through the second positioning member 13 is beneficial to further improving the assembling efficiency and the yield of the battery device.

Exemplarily, the positioning structure includes at least two second positioning members 13, wherein at least part of the second positioning members 13 may be slidably assembled on the carrier plate 11 along the first direction x. For example, the carrier plate 11 is provided with a pair of sliding grooves 111 matching with the pair of snaps 131, and the pair of snaps 131 may slide along the pair of sliding grooves 111. The second positioning member 13 is slidable to easily adjust the distance between the battery group and the first beam 21, which is beneficial to the assembling operation between the battery group and the first beam 21.

For example, the second positioning member 13 for fixing the middle first beam 21 is fixed relative to the carrier plate 11, and the other second positioning members 13 are slidable relative to the carrier plate 11. In this way, when assembling the battery group and the first beam 21, the positioning may be based on the middle first beam 21 to drive the battery groups to move from two sides toward the middle first beam 21, thereby implementing the extrusion and the bonding of the first beam 21 and the battery group, so that the first beam 21 and the battery group are assembled in place.

In a specific implementation, the assembling method of the battery device using the battery component positioning tooling of the disclosure is as follows. As shown in FIG. 20, the side of each battery 1 provided with the pole is placed facing down on the first positioning member 12 to form the battery group, and the first beam 21 coated with glue is inserted into the interval between the battery groups. The first beam 21 located in the middle is fixed by the second positioning member 13, the position is fixed, and the two adjacent first positioning members 12 on the left and the right thereof and the battery groups carried thereby are moved closer to the middle first beam 21 under the driving of the air cylinder, so that the battery group is bonded with the first beam 21. Then, the two outer first positioning elements 12 and the battery groups carried thereby are moved closer toward the direction of the middle first beam 21. The moving process of the two first positioning members 12 may push the inner first beam 21 and second positioning member 13 to move inward until the inner battery group is extruded, so that the relatively outer battery groups are bonded with the adjacent first beams 21. By analogy, the battery groups are moved in a sequence from the inside out. The inner battery group is moved first, and the relatively outer battery groups are then sequentially moved. Each battery group is moved inward to implement the bonding between each battery group and the adjacent first beam 21, so that the battery group and the first beam 21 of the battery device are assembled in place.

Specifically, compared with the assembling method of successively installing the battery groups on the two sides of the first beam 21, the assembling method of the embodiment can prevent premature curing of the glue layer on the side of the battery group installed later due to the difference in installation times of the two battery groups, prevent connection failure between the battery group and the first beam 21, and improve the assembling yield. In addition, the assembling method of the embodiment may adopt a manner of the air cylinders simultaneously operating, so that the assembling efficiency is higher and the connection yield is better.

Hereinafter, a specific implementation of the assembling method of the battery device of the disclosure is exemplified. The assembling method may specifically include the following steps.

In Step 301, as shown in FIG. 2 to FIG. 7, the first beam 21 is arranged on the positioning tooling, and the battery 1 adjacent to the first beam 21 is then arranged based on the first beam 21. The first beams 21 and the batteries 1 are alternately arranged along the horizontal direction by analogy until the preset required number of the batteries 1 is reached.

In Step 302, as shown in FIG. 8, the second beam 22 is arranged. The second beam 22 and the first beam 21 are perpendicularly intersected and engaged with each other to separate different battery groups in the longitudinal direction.

In Step 303, as shown in FIG. 8 and FIG. 9, the front and rear bezels 31 are installed, and the front and rear bezels 31 are connected to the two ends of the first beam 21.

In Step 304, as shown in FIG. 9 and FIG. 10, the left and right bezels 32 are installed, the left and right bezels 32 are bonded with the two ends of the front and rear bezels 31 and are locked through bolts.

In Step 305, as shown in FIG. 10 and FIG. 11, the box base plate 4 is installed, the box base plate 4 is bonded with the bottom of the battery 1, and the box base plate 4 and the box frame are then locked through bolts, thereby forming the box structure.

In Step 306, as shown in FIG. 11 and FIG. 12, the assembled module is turned over, so that the box base plate 4 faces downward, the opening of the box faces upwards, and at the same time, the pole on the battery 1 is exposed, and the busbar 5 is assembled above the battery 1.

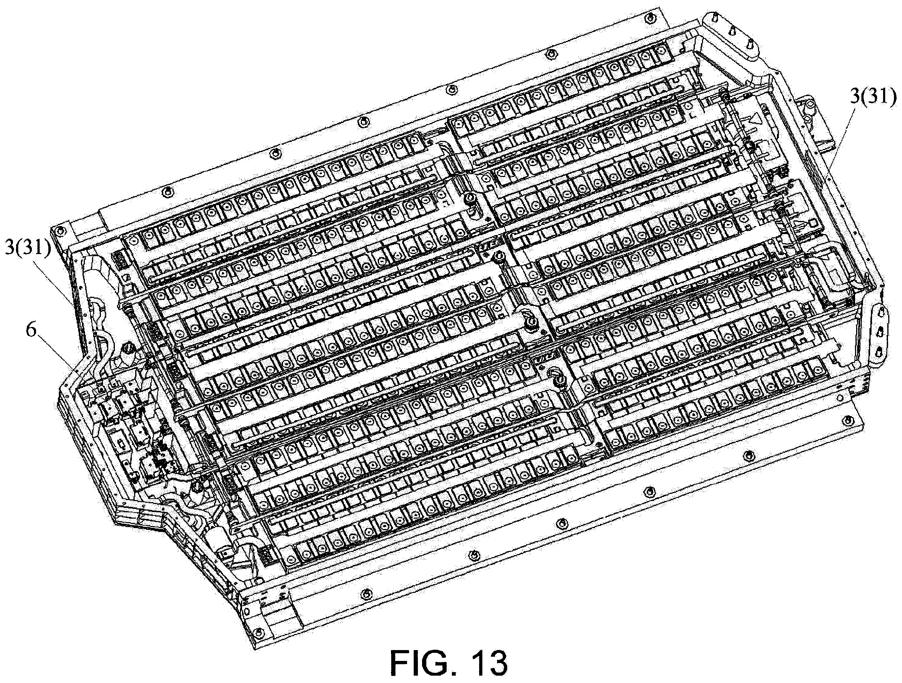

In Step 307, as shown in FIG. 13, the electrical device 6 is arranged in a space surrounded by the front and rear bezels 31.

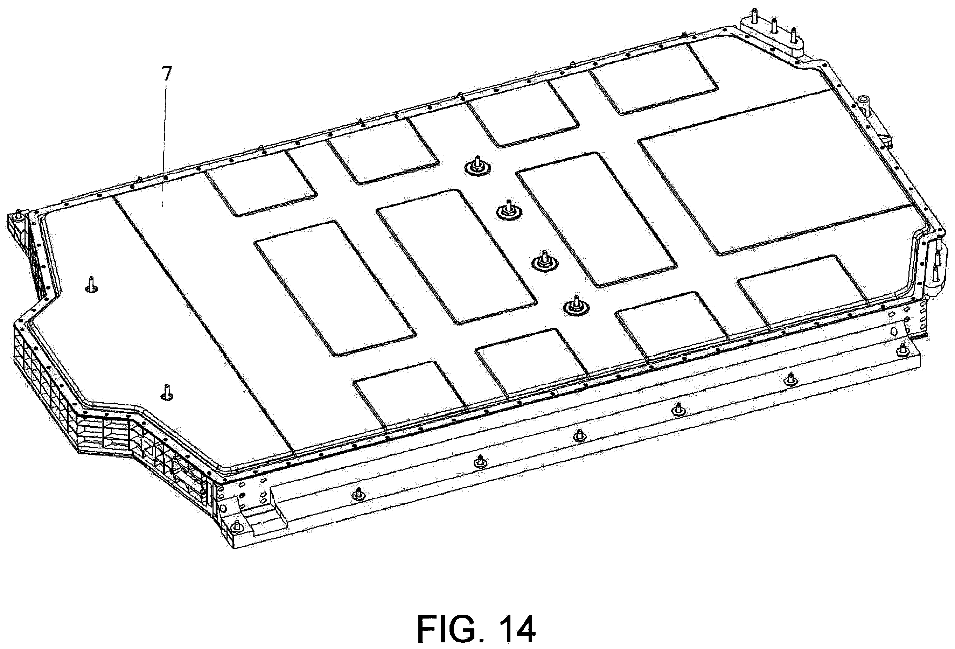

In Step 308, as shown in FIG. 14, the cover plate 7 is assembled, and the cover plate 7 is sealed with the lower box to form the battery device.

Specifically, the battery device provided in the embodiment may be a battery pack. The base plate of the battery device may include a liquid-cooling plate and a bottom shield. The glue fixing between the battery group and the box frame can reduce the pressure of the battery group on the liquid-cooling plate and improve the safety and the reliability of the battery pack.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure.

## Claims

1. An assembling method of a battery device, wherein the battery device comprises a beam (2), a box base plate (4), a box bezel (3), and a battery (1), the beam (2), the box base plate (4), and the box bezel (3) surround to form a box, and the battery (1) is disposed in the box, the assembling method comprising:
respectively connecting and assembling the beam (2), the box base plate (4), and the box bezel (3) with the battery (1) according to a set sequence, wherein in the set sequence, the box base plate (4) or at least part of the box bezel (3) is assembled after the beam (2).

2. The assembling method of the battery device according to claim 1, wherein respectively connecting and assembling the beam (2), the box base plate (4), and the box bezel (3) with the battery (1) according to the set sequence comprises:
assembling and fixing the beam (2) and the box bezel (3) with the battery (1) first, and then assembling the box base plate (4).

3. The assembling method of the battery device according to claim 2, wherein assembling and fixing the beam (2) and the box bezel (3) with the battery (1) comprises: after assembling and fixing the beam (2) and the box bezel (3) with the battery (1), in a direction perpendicular to a large surface of the battery (1), having a gap between at least one large surface of each of the battery (1) and an adjacent structure.

4. The assembling method of the battery device according to claim 3, wherein assembling and fixing the beam (2) and the box bezel (3) with the battery (1) comprises:
disposing a spacer on a large surface of at least part of batteries (1), then sequentially assembling the batteries (1) along the direction perpendicular to the large surface of the battery (1), and having a gap between a battery (1) assembled later and an adjacent battery (1) assembled earlier.

5. The assembling method of the battery device according to claim 2, wherein assembling and fixing the beam (2) and the box bezel (3) with the battery (1) comprises:
bonding and fixing the battery (1) and the beam (2) first, and then connecting the box bezel (3) to the beam (2) to form a box frame.

6. The assembling method of the battery device according to claim 5, wherein bonding and fixing the battery (1) and the beam (2) comprises:
bonding and fixing a first side surface of the battery (1) and a first beam (21), wherein the first side surface of the battery (1) is perpendicular to the large surface of the battery (1).

7. The assembling method of the battery device according to claim 6, wherein bonding and fixing the first side surface of the battery (1) and the first beam (21) further comprises:
along a direction perpendicular to a large surface of the first beam (21), alternately arranging a common structural beam (211) and a heat exchange functional beam (212), wherein the first beam (21) comprises the common structural beam (211) and the heat exchange functional beam (212), and the heat exchange functional beam (212) is configured as a heat exchange plate; bonding and fixing a first side surface and the common structural beam (211), and bonding and fixing another first side surface and the heat exchange functional beam (212), wherein the battery (1) comprises two opposite first side surfaces.

8. The assembling method of the battery device according to claim 6, wherein bonding and fixing the battery (1) and the beam (2) further comprises:
after bonding and fixing the first side surface of the battery (1) and the first beam (21), assembling a second beam (22), wherein the second beam (22) is perpendicular to the first beam (21), and the second beam (22) is snap-fitted with the first beam (21).

9. The assembling method of the battery device according to claim 6, wherein connecting the box bezel (3) to the beam (2) to form the box frame comprises:
assembling front and rear bezels (31) first, and then assembling left and right bezels (32), wherein the front and rear bezels (31) are respectively located at two ends of the first beam (21), and the left and right bezels (32) extend in a same direction as the first beam (21).

10. The assembling method of the battery device according to claim 9, wherein assembling the front and rear bezels (31) first, and then assembling the left and right bezels (32) specifically comprises:
bonding a surface of the left and right bezels (32) facing an inner side of the box and an end surface of the front and rear bezels (31).

11. The assembling method of the battery device according to claim 10, wherein connecting the box bezel (3) to the beam (2) to form the box frame comprises:
providing a glue groove at an end of the front and rear bezels (31), and disposing a sealant (8) in the glue groove at the end of the front and rear bezels (31);
when installing the left and right bezels (32), bonding the surface of the left and right bezels (32) facing the inner side of the box and the end surface of the front and rear bezels (31) through the sealant (8), and locking through a fastener (9).

12. The assembling method of the battery device according to claim 9, wherein assembling the front and rear bezels (31) specifically comprises:
providing an adapter (20) at the two ends of the first beam (21), providing a slot for inserting and matching with the adapter (20) on the front and rear bezels (31), and inserting the adapter (20) at the two ends of the first beam (21) into the slot of the front and rear bezels (31).

13. The assembling method of the battery device according to claim 10, wherein connecting the box bezel (3) to the beam (2) to form the box frame further comprises:
providing a cavity opening on an end surface of the left and right bezels (32), and sealing the cavity opening on the end surface of the left and right bezels (32) through glue.

14. The assembling method of the battery device according to any one of claims 5-13, wherein assembling and fixing the beam (2) and the box bezel (3) with the battery (1) comprises:
assembling and fixing one side of the battery (1) where a pole is facing a ground with the box bezel (3) and the beam (2).

15. The assembling method of the battery device according to claim 14, wherein assembling and fixing the beam (2) and the box bezel (3) with the battery (1) comprises:
providing a positioning tooling, assembling and connecting the box bezel (3), the beam (2), and the battery (1) on the positioning tooling, providing a positioning structure on the positioning tooling, and positioning positions of the box bezel (3), the beam (2), and/or the battery (1) through the positioning structure.

16. The assembling method of the battery device according to claim 15, wherein bonding and fixing the battery (1) and the beam (2) comprises:
arranging the beam (2) on the positioning tooling first, and then installing the battery (1) in a region surrounded by the beam (2), so that the battery (1) is bonded with an adjacent beam (2).

17. The assembling method of the battery device according to claim 15, wherein bonding and fixing the battery (1) and the beam (2) comprises:
arranging the battery (1) on the positioning tooling first, and then installing the beam (2) between batteries (1) to be bonded with adjacent batteries (1).

18. The assembling method of the battery device according to claim 15, wherein bonding and fixing the battery (1) and the beam (2) comprises:
alternately arranging batteries (1) and beams (2) on the positioning tooling, and bonding and fixing adjacent batteries (1) and beams (2).

19. The assembling method of the battery device according to any one of claims 15-18, wherein:
assembling the box base plate (4) specifically comprises:
bonding and fixing the box base plate (4) to one side of the battery (1) away from the pole;
after assembling the box base plate (4), assembling the box base plate (4) further comprises:
turning over an assembled module as a whole, and assembling a busbar on one side of the battery (1) provided with the pole.

20. A battery device, prepared by adopting the assembling method of the battery device according to any one of claims 1-19, the battery device comprising a box formed from a beam (2), a box bezel (3), and a box base plate (4), and a battery (1) located in the box.

21. The battery device according to claim 20, wherein the box bezel (3) and the box base plate (4) and the box bezel (3) and the beam (2) are both connected by adopting a non-welding manner.

22. An assembling equipment of a battery device, wherein the assembling equipment of the battery device is configured to execute the steps in the assembling method of the battery device according to any one of claims 1-19, the assembling equipment comprising:
a first assembling mechanism, configured to assemble and fix a beam (2) and a battery (1);
a second assembling mechanism, configured to assemble a box base plate (4) and/or at least part of a box bezel (3) on a component assembled and formed from the beam (2) and the battery (1).

23. A battery component positioning tooling, wherein the battery component positioning tooling is configured to position at least part of components constituting a battery device during an assembling process of the battery device; the battery device comprises a beam (2), a box base plate (4), a box bezel (3), and a battery (1), the beam (2), the box base plate (4), and the box bezel (3) surround to form a box, and the battery (1) is disposed in the box;
the battery component positioning tooling comprises a carrier plate (11) and a positioning structure located on the carrier plate (11), the carrier plate (11) is configured to carry at least one of the box bezel (3), the beam (2), and the battery (1), and the positioning structure is configured to position at least one of the box bezel (3), the beam (2), and the battery (1).

24. The battery component positioning tooling according to claim 23, wherein the positioning structure comprises a first positioning member (12), and the first positioning member (12) is configured to carry and position the battery (1).

25. The battery component positioning tooling according to claim 24, wherein the first positioning member (12) comprises a battery pole positioning part (121), and the battery pole positioning part (121) is configured to position a pole of the battery (1).

26. The battery component positioning tooling according to claim 24 or 25, wherein the beam (2) comprises a first beam (21), and batteries (1) are arranged into groups along an extension direction of the first beam (21);
the positioning structure comprises at least one of the first positioning member (12), and each of the first positioning member (12) is configured to carry a battery group and position the batteries (1) in the battery group.

27. The battery component positioning tooling according to claim 26, wherein the positioning structure comprises at least two first positioning members (12) arranged along a first direction (x), the at least two first positioning members (12) are arranged at an interval from each other, and the interval between the adjacent first positioning members (12) allows the first beam (21) to be placed.

28. The battery component positioning tooling according to claim 27, wherein the positioning structure further comprises a first driving mechanism, and the first driving mechanism is configured to drive the first positioning member (12) to slide along the first direction (x).

29. The battery component positioning tooling according to claim 28, wherein the first driving mechanism is an air cylinder, and the air cylinder is disposed on one side of the carrier plate (11) away from the first positioning member (12) and is in driving connection with the first positioning member (12).

30. The battery component positioning tooling according to any one of claims 27-29, wherein the positioning structure further comprises a second positioning member (13), and the second positioning member (13) is configured to engage and position two ends of the first beam (21) in the extension direction.

31. The battery component positioning tooling according to claim 30, wherein the positioning structure comprises at least two second positioning members (13), wherein at least part of the second positioning members (13) is slidably assembled on the carrier plate (11) along the first direction (x).
